# EUROPEAN PATENT SPECIFICATION

(11) **EP 2 607 269 B1**
(45) Date of publication and mention of the grant of the patent: **25.02.2015**
(21) Application number: 11776814.3
(22) Date of filing: 05.08.2011
(51) Int. Cl.: B65D 85/804, A47J 31/36

(54) **CAPSULE AND METHOD FOR PREPARING DRINKS**
KAPSEL UND VERFAHREN ZUR GETRÄNKEZUBEREITUNG
CAPSULE ET PROCEDE DE PREPARATION DE BOISSONS

(30) Priority: 18.08.2010 ES 201031266
(43) Date of publication of application: 26.06.2013
(73) Proprietor: ECOCAP ESPRESSOBAR, S.L., 01013 Vitoria Alava (ES)
(72) Inventor: LAFUENTE URQUIZA, Ignacio, 01139 Sarria (Álava) (ES)
(74) Representative: Pons Ariño, Angel
(86) International application number: PCT/ES2011/070584
(87) International publication number: WO 2012/022819

(56) References cited:
- EP-A1- 1 767 467
- WO-A1-2008/132571
- AT-B1- 507 345
- US-A1- 2006 011 066
- US-A1- 2008 028 946
- US-A1- 2010 180 775

## Description

### OBJECT OF THE INVENTION

The present invention falls within the field of the obtention of aromatic beverages.

The object of the invention consists of a capsule containing a preparation of a product which mixed with water creates an aromatic beverage, which on contact with hot water results in a hot drink.

### BACKGROUND OF THE INVENTION

Today, many ways to prepare aromatic coffee or other hot or cold aromatic beverages which make use of a liquid mixture based on water, are known.

Among all them, in recent years, infusion vending machines or coffee makers that use the so-called monodose pods have proliferated.

There are coffee monodoses, also known as pods, capsules, ecological (also called green) capsules, biodegradable capsules, etc.

These are aluminum, plastic or other material capsules with different geometrical shapes, cylindrical, conical, etc. that can be closed on one or both sides by a thermo sealed film. So that, the aromatic beverage machine pierces said film in one or more points to introduce hot water which mixes with the content to produce the aromatic beverage.

All these capsule based systems require the piercing of the container in some of its parts, to allow the entry of water and allow mixing to occur.

These systems have means to pierce the capsules in the water inlet area through spikes, cutting rings, or any other element that pierces the capsule or closing film, allowing the entry of water into the capsule.

With this system, the container is unusable and its recycling is not easy since on the one hand, it incorporates complex materials such as thermo sealable lids that seal to the body of the capsule and on the other hand, the detachment of the capsule and the coffee or product used to prepare aromatic beverages, is very complicated.

For recycling, the so called green capsules allow, once used, to detach the coffee from the capsule, for the subsequent recycling of it.

This system is based on introducing a monodose inside the capsule, usually E.S.E. containing coffee and once used, detaching by manual or mechanical means the coffee monodose from the capsule, easily solving the problem of recycling.

The prior art is also disclosed in EP1767467 A1 and US2010/180775 A1.

### DESCRIPTION OF THE INVENTION

The object of the invention is a capsule for coffee or infusions that provides a solution to the problems raised above since it has an opening system to allow the entry of water without piercing.

The capsule of the invention is made up of three parts:
- A central body with two closing areas, a water inlet that is already pre-pierced by piercings and a product outlet.
- A lid on the water inlet area with a dual function, acting as a water inlet lid and as coffee extractor after using the capsule.
- A lid on the side of the coffee outlet called outlet lid with two positions, closed and open.

In the case of the capsule of the invention, the system used to allow entry of water to the capsule is based on the displacement of the inlet lid from the closed position to the open position by pushing the extraction chamber, which as a whole, has a longitudinal inner size less than that of the capsule. The lid moves its position, allowing the entry of water through the holes in the capsule and the lid.

The capsule of the invention, contrary to what happens with other known systems that make use of under pressure pre-extraction systems based on outlet valves, closing film deformation until its rupture, delayed piercing of the outlet area, etc. is characterized for having a pre-extraction system based on the fact that water enters the capsule and remains in said capsule until the water's inside pressure causes the outlet lid to be displaced from the closed position to the open position. During this time the water enters the coffee particles, preparing them for extraction.

As in all known systems, the extraction of coffee or other similar products, such as aromatic beverages like infusions, is produced by water going through the product preparation at a determined pressure. To this end, the outlet lid has built-in flaps or scrapers, which have three functions. On the one hand, the scrapers clean the inside of the capsule's body, leaving the lid's adjusting surface clean for its assembly. The second function is to guide the outlet lid in its displacement from the closed position to the open position.

The third function is to hold the lid during the displacement to the capsule's emptying position and simultaneously to hold the coffee as a tray.

In the capsule of the invention, the detaching of the product preparation necessary to prepare the aromatic beverage from said capsule to allow the subsequent recycling, is produced by the manual or automatic displacement of the ejector - inlet lid - which expels outside the capsule the product preparation required to prepare the aromatic beverage, thus avoiding the problems raised above for the recycling of the capsule.

Last but not least, the capsule object of the invention can be adapted to capsules manufactured with various dimensions and geometries, as its body is defined by a hollow solid of revolution or other hollow volume adapted to the machine and open on one side, which in turn allows them to adapt to different types of extraction chambers, coffee filter holders, or vending machine heads and contain different amounts of different products.

### DESCRIPTION OF THE DRAWINGS

To complement the description being made and in order to help better understand the features of the invention, according to a preferred practical embodiment thereof, a set of drawings is attached as an integral part of said description, wherein the following is shown as way of illustration but not limited to:
Figure 1.- Shows a section of the capsule object of the invention.
Figure 2.- Shows a plan view of the capsule object of the invention.
Figure 3a.- Shows an elevation section of the capsule object of the invention with the capsule closed.
Figure 3b.- Shows an elevation section of the capsule object of the invention with the inlet lid opened.
Figure 3c.- Shows an elevation section of the capsule object of the invention where the water inlet is shown.
Figure 3d.- Shows an elevation section of the capsule object of the invention where the opening of the outlet lid is shown.
Figure 3e.- Shows an elevation section of the capsule object of the invention where the output of the product is shown.
Figure 3f.- Shows a section of the capsule object of the invention which shows the ejection of the product preparation necessary to prepare the aromatic beverage along with the tray lid.

### PREFERRED EMBODIMENT OF THE INVENTION

In view of the figures, a preferred embodiment of the capsule (1) object of this invention is described below, in which its use to make an aromatic water-based beverage, in this case coffee, is described.

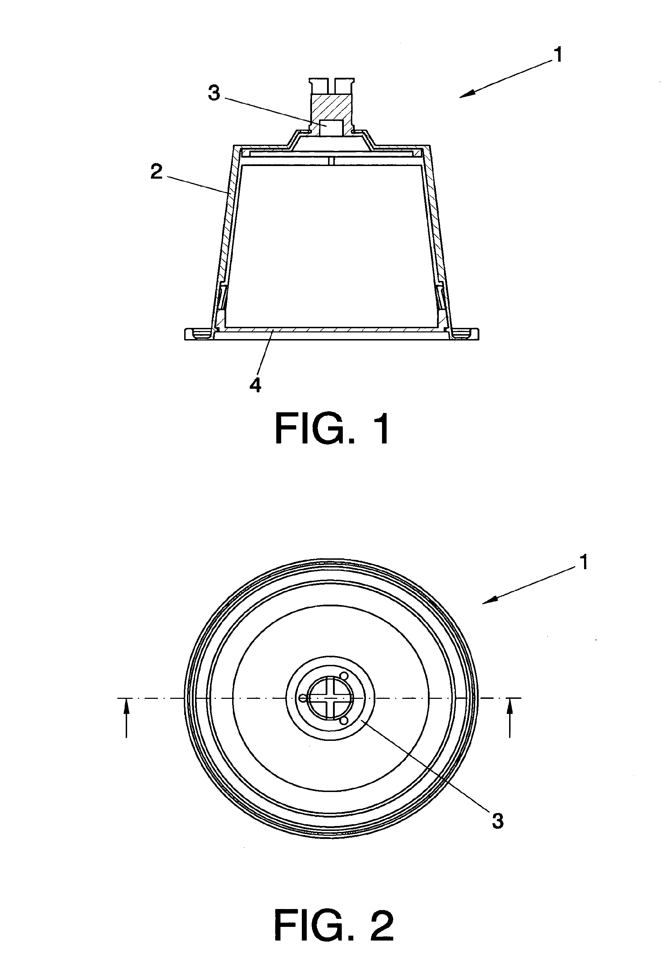

First and as shown in Figure 1, once a body (2), defined by a hollow solid of revolution - conical, cylindrical, etc. - or of any hollow geometry; with an outer and an inner wall which has a flat protuberance in its top with a central opening (6), is filled with a coffee preparation, it is closed with an outlet lid (4), and it is placed in an extraction chamber of an aromatic beverage preparation machine.

Once the capsule (1) is introduced in the extraction chamber of an aromatic beverage machine, the displacement of a water inlet lid (3) occurs, since the capsule (1) is larger than the extraction chamber.

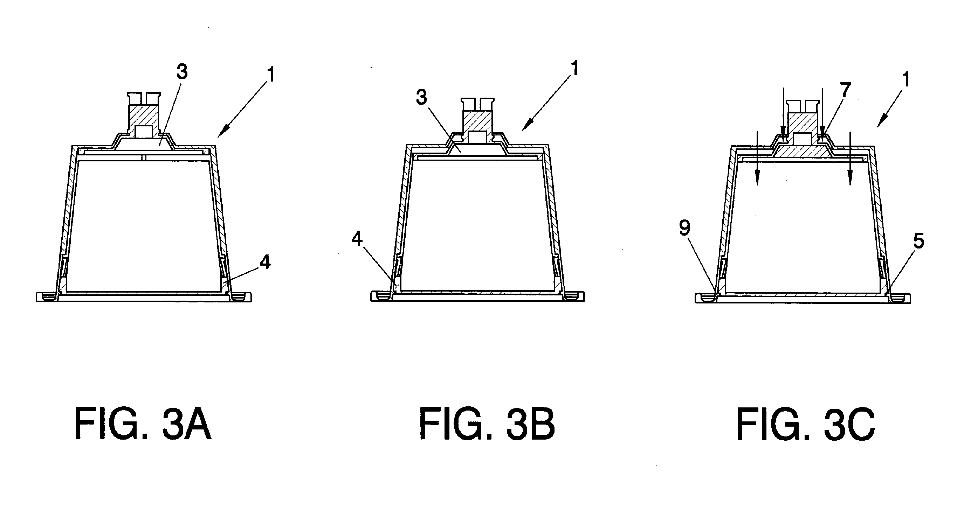

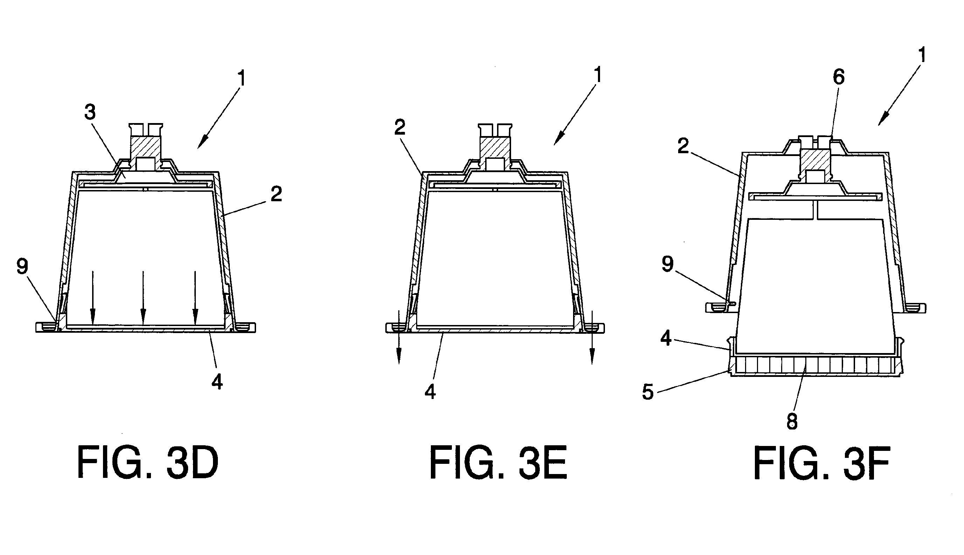

Water pumping inside the body (2) of the capsule (1) is done by displacement an inlet lid (3), which as shown in the figures, is found inside the body (2), which switches from being in a closed position as shown in Figure 3a, to an open position as shown in Figure 3b.

The inlet lid (3) gets placed in a lower position, shown in Figure 3c, allowing the entry of water inside through some piercings (7) of the body (2) and some holes arranged in the inlet lid (3).

By flooding the interior of the body (2) the extraction of coffee is possible by mixing the coffee with water. When the body (2) is filled, the pressure inside said body (2) increases so that said pressure pushes the outlet lid (4) until said outlet lid (4) pushes a beveled flap (5) that runs around its outer perimeter so that it surpasses a seat formed by an inner perimeter ridge (9) that runs inside the body (2) along its interior wall.

When said ridge comes off (9) the outlet lid (4) switches to the position shown in Figure 3d, as the dimensions and geometry of the lid and the body (2) are different, and thanks to the flexibility given by vertical grooves (8) made in a vertical wall of the outlet lid (4) defining some flaps among them, the coupling between the both outlet lid (4) and vertical grooves (8) is perfect, and also between them there is a small gap through which the coffee pours out as seen in Figure 3e.

Finally, the ejection occurs in order to proceed to the recycling of the capsule (1), the outlet lid (4) remains as a tray for the product required to prepare the aromatic beverage and it is drained by the removal of the outlet lid (4) when the inlet lid (3) pushes the product preparation used, leaving the body (2) open.

In an even more preferred embodiment of the object of the invention, the outlet lid (4) has a series of flexible flaps that come from the vertical wall spaced at a certain distance, serving as a tray for the product required to prepare the beverage.

In other still further preferred embodiments of the object of the invention, the preparation may be respectively used for soft drinks, juices, teas, powdered milk or condensed milk; for juices prepared from powder, tea or other infusions or hot / cold milk, etc ...

## Claims

1. Capsule (1) for preparing beverages **characterized in that** it comprises:
- a hollow body (2) with an outer wall and an inner wall for housing a beverage preparation, said hollow body comprising:
- a flat protuberance with a central opening (6) which is located in the top center part,
- some piercings (7) made around the opening (6) intended to allow the passage of water,
- a perimetral ridge (9) which is located at the bottom of the inner wall of the body (2),
- an inlet lid (3) located inside the upper area of the body (2), and comprising some holes designed to allow entry of water in the body (2), and
- an outlet lid (4) located inside the lower area of the body (2) and shaped as a tray with a flat base and vertical walls which has an essentially triangular beveled flap (5) on its lower outer perimeter designed to fit with the ridge (9).

2. Capsule (1) according to claim 1 **characterized in that** the outlet lid (4) comprises a series of vertical grooves (8) perpendicular to the base, distributed in parallel which define some flaps between said vertical grooves (8).

3. Capsule (1) according to claim 1 **characterized in that** the outlet lid (4) further comprises several spaced flexible flaps, starting from the vertical walls, adapted to clean the inside of the body (2).

4. Capsule (1) according to claim 1 **characterized in that** the body (2) is a solid of revolution.

5. Capsule (1) according to claim 1, **characterized in that** the preparation is selected from the group consisting of: coffee preparation, infusions, powdered milk and condensed milk.

6. Process for the preparation of aromatic beverages that makes use of the capsule (1) described in any one of claims 1 to 5 **characterized in that** it comprises the following steps:
- insert the closed capsule (1) with the preparation contained within the body (2) in an extraction chamber of an aromatic beverage preparation machine, displacement the inlet lid (3), by the pressure applied on it when inserted, into a lower position inside the body (2) giving way between the opening (6) and the inlet lid (3),
- inject water in the interior of the body (2) through the opening (6) and the piercings (7) so that said water comes in contact with the preparation,
- wait long enough for water to mix with the preparation included in the body (2) generating the aromatic beverage so that there is an increase of pressure inside it due to the entry of water, and
- the opening of the outlet lid (4) as a result of the pressure exerted in the previous step which acts in a way that pushes the outlet lid (4) until the flap (5) surpasses the ridge (9) leaving a gap between the outlet lid (4) and lower part of the body (2) through which the aromatic beverage already prepared pours out.

7. Process according to claim 6 **characterized in that** it further comprises ejecting the inlet lid (3) and the outlet lid (4) to proceed to the recycling of the capsule.

8. Process according to claim 6 **characterized in that** it comprises cleaning the inside of the body (2) using the flaps of the outlet lid (4) when said outlet lid (4) is inserted.

9. Process according to claim 6, **characterized in that** the preparation is selected from the group consisting of: coffee, infusions, powdered milk and condensed milk.

## Patentansprüche

1. Kapsel (1) zur Zubereitung von Getränken, **dadurch gekennzeichnet, dass** sie Folgendes umfasst:
- einen Hohlkörper (2) mit einer Außenwand und einer Innenwand zur Aufnahme einer Getränkezubereitung, wobei besagter Hohlkörper
- eine flache Erhöhung mit einer zentralen Öffnung (6), die sich im oberen mittleren Teil befindet,
- mehrere die Öffnung (6) umgebende Einstechlöcher (7), um den Durchfluss von Wasser zu erlauben,
- eine umlaufende Rippe (9), die sich am Boden der Innenwand des Körpers (2) befindet, umfasst,
- einen Eintrittsdeckel (3), der sich im Innern des oberen Bereichs des Körpers (2) befindet und mehrere Löcher umfasst, um den Eintritt von Wasser in den Körper (2) zu erlauben,
und
- einen Austrittsdeckel (4), der sich im Innern des unteren Bereichs des Körpers (2) befindet und die Form einer Schale mit einer flachen Unterseite und vertikalen Wänden aufweist, die an ihrem unteren äußeren Umfang eine im Wesentlichen dreieckige abgeschrägte Lasche (5) aufweist, die sich an die Rippe (9) anpasst.

2. Kapsel (1) nach Anspruch 1, **dadurch gekennzeichnet, dass** der Austrittsdeckel (4) eine Reihe von parallel angeordneten und senkrecht zur Unterseite verlaufenden vertikalen Rillen (8) umfasst, die mehrere Laschen zwischen den besagten vertikalen Rillen (8) definieren.

3. Kapsel (1) nach Anspruch 1, **dadurch gekennzeichnet, dass** der Austrittsdeckel (4) weiterhin mehrere beabstandete flexible Laschen umfasst, die von den vertikalen Wänden ausgehen und zur Reinigung des Innern des Körpers (2) adaptiert sind.

4. Kapsel (1) nach Anspruch 1, **dadurch gekennzeichnet, dass** der Körper (2) ein Rotationskörper ist.

5. Kapsel (1) nach Anspruch 1, **dadurch gekennzeichnet, dass** die Zubereitung aus der Gruppe bestehend aus Kaffeezubereitung, Kräuter- und Früchtetees, Trockenmilch und Kondensmilch ausgewählt wird.

6. Verfahren zur Zubereitung aromatischer Getränke, bei dem die in irgendeinem der Ansprüche 1 bis 5 beschriebene Kapsel (1) zur Anwendung kommt, **dadurch gekennzeichnet, dass** es folgende Schritte umfasst:
- Einsetzen der verschlossenen Kapsel (1) mit der im Körper (2) enthaltenen Zubereitung in ein Extraktionsgefäß einer Maschine für die Zubereitung aromatischer Getränke, Verlagerung des Eintrittsdeckels (3) durch den beim Einsetzen ausgeübten Druck in eine niedrigere Position innerhalb des Körpers (2), sodass der Weg zwischen der Öffnung (6) und dem Eintrittsdeckel (3) frei wird,
- Einlassen von Wasser ins Innere des Körpers (2) durch die Öffnung (6) und die Einstechlöcher (7), sodass das besagte Wasser in Kontakt mit der Zubereitung gelangt,
- Abwarten, bis sich das Wasser mit der im Körper (2) enthaltenen Zubereitung gemischt hat und das aromatische Getränk entstanden ist, wobei aufgrund des Eintritts von Wasser eine Druckerhöhung in dessen Innern stattfindet, und
- Öffnen des Austrittsdeckels (4) als Folge des im vorherigen Schritt ausgeübten Drucks, der den Austrittsdeckel (4) soweit verschiebt, dass die Lasche (5) über die Rippe (9) hinweggeht, sodass eine Lücke zwischen dem Austrittsdeckel (4) und dem unteren Teil des Körpers (2) entsteht, durch die das bereits zubereitete aromatische Getränk hinausläuft.

7. Verfahren nach Anspruch 6, **dadurch gekennzeichnet, dass** es zum Zweck der Wiederverwendung der Kapsel weiterhin das Ausstoßen des Eintrittsdeckels (3) und des Austrittsdeckels (4) umfasst.

8. Verfahren nach Anspruch 6, **dadurch gekennzeichnet, dass** es das Säubern des Innern des Körpers (2) unter Verwendung der Laschen des Austrittsdeckels (4) umfasst, wenn der besagte Austrittsdeckel (4) eingesetzt ist.

9. Verfahren nach Anspruch 6, **dadurch gekennzeichnet, dass** die Zubereitung aus der Gruppe bestehend aus Kaffee, Kräuter- und Früchtetees, Trockenmilch und Kondensmilch ausgewählt wird.

## Revendications

1. Capsule (1) pour préparer des boissons, **caractérisée en ce qu'**elle comprend :
- un corps creux (2) avec une paroi externe et une paroi interne destiné à loger une préparation de boisson, ledit corps creux comprenant :
- une protubérance plate avec une ouverture centrale (6) qui est située dans la partie centrale supérieure,
- quelques perforations (7) faites autour de l'ouverture (6) prévues pour permettre le passage de l'eau,
- une strie périmétrique (9) qui est située à la base de la paroi interne du corps (2),
- un couvercle d'entrée (3) situé à l'intérieur de la zone supérieure du corps (2), et comprenant quelques trous prévus pour permettre l'entrée d'eau dans le corps (2), et
- un couvercle de sortie (4) situé à l'intérieur de la zone inférieure du corps (2) et en forme de plateau avec une base plate et des parois verticales qui possède un rabat biseauté essentiellement triangulaire (5) sur son périmètre externe inférieur conçu pour s'emboîter dans la strie (9).

2. Capsule (1) selon la revendication 1, **caractérisée en ce que** le couvercle de sortie (4) comprend une série de rainures verticales (8) perpendiculaires à la base, réparties parallèlement qui définissent des rabats entre lesdites rainures verticales (8).

3. Capsule (1) selon la revendication 1, **caractérisée en ce que** le couvercle de sortie (4) comprend en outre plusieurs rabats flexibles espacés, démarrant des parois verticales, prévues pour nettoyer l'intérieur du corps (2).

4. Capsule (1) selon la revendication 1, **caractérisée en ce que** le corps (2) est un solide de révolution.

5. Capsule (1) selon la revendication 1, **caractérisée en ce que** la préparation est choisie dans le groupe composé de : préparation de café, infusions, lait en poudre et lait condensé.

6. Procédé pour la préparation de boissons aromatisées qui utilisent la capsule (1) décrite dans n'importe laquelle des revendications 1 à 5, **caractérisé en ce qu'**il comprend les étapes suivantes :
- insertion de la capsule fermée (1) avec la préparation contenue à l'intérieur du corps (2) dans une chambre d'extraction d'une machine à préparation de boisson aromatisée, déplacement du couvercle d'entrée (3), par la pression appliquée sur ce dernier lorsqu'il est inséré, dans une position inférieure à l'intérieur du corps (2) cédant le passage entre l'ouverture (6) et le couvercle d'entrée (3),
- injection d'eau à l'intérieur du corps (2) à travers l'ouverture (6) et les perforations (7) pour que ladite eau arrive au contact de la préparation,
- délai d'attente suffisamment long pour que l'eau se mélange avec la préparation incluse dans le corps (2) produisant la boisson aromatisée pour qu'il y ait une augmentation de la pression à l'intérieur de ce dernier due à l'entrée de l'eau, et
- l'ouverture du couvercle de sortie (4) résultant de la pression exercée au cours de l'étape précédente qui opère de façon à pousser le couvercle de sortie (4) jusqu'au rabat (5) dépasse la strie (9) laissant un espace entre le couvercle de sortie (4) et la partie inférieure du corps (2) à travers lequel s'écoule la boisson aromatisée déjà prête.

7. Procédé selon la revendication 6, **caractérisé en ce qu'**il comprend en outre l'éjection du couvercle d'entrée (3) et du couvercle de sortie (4) pour procéder au recyclage de la capsule.

8. Procédé selon la revendication 6, **caractérisé en ce qu'**il comprend le nettoyage de l'intérieur du corps (2) en utilisant les rabats du couvercle de sortie (4) lorsque ledit couvercle de sortie (4) est inséré.

9. Procédé selon la revendication 6, **caractérisé en ce que** la préparation est choisie dans le groupe composé de : café, infusions, lait en poudre et lait condensé.
